# EUROPEAN PATENT APPLICATION

(11) **EP 4 124 149 A1**
(43) Date of publication of application: **25.01.2023**
(21) Application number: 21789330.4
(22) Date of filing: 14.04.2021
(51) Int. Cl.: H04W 74/08, H04L 5/00

(54) **WIFI COMMUNICATION METHOD AND ELECTRONIC DEVICE**

(30) Priority: 17.04.2020 CN 202010306683
(71) Applicant: Huawei Technologies Co., Ltd., Shenzhen, Guangdong 518129, (CN)
(72) Inventor: SI, Xiaoshu, Shenzhen, Guangdong 518129 (CN); WANG, Xiang, Shenzhen, Guangdong 518129 (CN); LI, Ying, Shenzhen, Guangdong 518129 (CN)
(74) Representative: Gill Jennings & Every LLP
(86) International application number: PCT/CN2021/087221
(87) International publication number: WO 2021/208960

(57) **Abstract**

This application relates to the field of communications technologies, and discloses a Wi-Fi communication method and an electronic device. The method includes the following steps: An AP device is connected to a first device by using a target channel. The AP device supports full-duplex communication. On this basis, when the target channel is idle, the AP device sends a control message to the first device by using the target channel, where the control message includes a time period in which the AP device occupies the target channel. The first device determines, based on the time period, a time for sending a first data frame, where the sending time is in the time period. Then the first device sends the first data frame to the AP device at the sending time by using the target channel. Correspondingly, the AP device receives the first data frame in the time period by using the target channel. It can be learned that, according to the technical solutions of this application, the AP device not only can send a data frame by using the target channel, but also can indicate the peer device to send a data frame by using the target channel, thereby implementing full-duplex communication and further shortening a transmission delay.

## Description

This application claims priority to Chinese Patent Application No. 202010306683.9, filed with the China National Intellectual Property Administration on April 17, 2020, and entitled "WI-FI COMMUNICATION METHOD AND ELECTRONIC DEVICE", which is incorporated herein by reference in its entirety.

### TECHNICAL FIELD

This application relates to the field of communications technologies, and in particular, to a wireless (wireless fidelity, Wi-Fi) communication method and an electronic device.

### BACKGROUND

In a Wi-Fi technology, a station (station, STA) device may access, by using at least one access point (access point, AP) device, a Wi-Fi network provided by an optical network terminal (optical network terminal, ONT) device. The AP device is configured to forward data between the STA device and the ONT device.

As defined in an existing Wi-Fi communication mechanism, a half-duplex mode is used for data transmission between an AP device and an ONT device, between an AP device and a STA device, and between AP devices. "Half-duplex" means that after an AP device occupies a channel, the AP device can only send data to a peer device, or receive data from the peer device. This increases a transmission delay between the ONT device and the STA device.

### SUMMARY

Embodiments of this application provide a Wi-Fi communication method and an electronic device, to resolve a problem that a transmission delay in an existing Wi-Fi communication mechanism is long.

According to a first aspect, an embodiment of this application provides a Wi-Fi communication method. The method includes the following steps: An AP device senses whether a target channel is idle; if the target channel is idle, the AP device sends a first control message to a first device by using the target channel, where the first control message includes information indicating that the AP device uses a full-duplex mode for data frame transmission and a time period in which the AP device occupies the target channel, and the time period is used by the first device to determine a time for sending a data frame by using the target channel; and the AP device receives a first data frame from the first device after the time in the time period by using the target channel.

In a Wi-Fi communications system, a station device usually accesses, by using an AP device, a Wi-Fi network provided by an ONT device. The AP device may provide a channel connected to the ONT device and the station device, to forward communication data between the ONT device and the station device. In this application, the AP device, for example, as a main control device, may sense whether the target channel connected to the AP device is idle. Further, when the target channel is idle, the AP device occupies the target channel and determines the occupation time period. Then the AP device indicates a peer device to send a data frame to the AP device in the occupation time period. In this implementation, after occupying the target channel, the AP device not only can send a data frame by using the target channel, but also can indicate the peer device to send a data frame by using the target channel, thereby implementing full-duplex communication and further shortening a transmission delay.

In an optional design, after the AP device receives the first data frame from the first device in the time period by using the target channel, the method further includes: the AP device sends a first acknowledgement ACK frame to the first device by using the target channel, where the first ACK frame is an ACK frame for the first data frame. After receiving the first data frame, the AP device may send the first ACK frame to the first device in time, to ensure reliability of communication between the AP device and the first device.

In an optional design, the first control message further includes information for indicating the first device to use the full-duplex mode for data frame transmission with the AP device, and after the AP device sends the first control message to the first device by using the target channel, the method further includes: the AP device sends a second data frame to the first device in the time period by using the target channel; and the AP device receives a second ACK frame in the time period by using the target channel, where the second ACK frame is an ACK frame for the second data frame. In some embodiments, the first device may support the full-duplex communication mode and a half-duplex communication mode. Correspondingly, the AP device as the main control device may indicate the communication mode of the first device by using the control message. In this implementation, operation flexibility between the AP device and the first device is higher. Therefore, this solution is applicable more widely.

In an optional design, the AP device receives the first data frame and the second ACK frame by using a first group of resource units; and the AP device sends the first ACK frame and the second data frame by using a second group of resource units, where the first group of resource units and the second group of resource units form the target channel.

The AP device can usually support at least one frequency. This frequency may provide a plurality of channels. One channel may be divided into a plurality of RUs. In some embodiments, the target channel is a channel at a frequency in the AP device. The AP device may use an entire bandwidth of the target channel to send a data frame and receive a data frame. This implementation can be used to maximize spectrum utilization of the target channel, thereby saving transmission resources. In other embodiments, the target channel is a channel at a frequency in the AP device. When the first device uses the full-duplex communication mode, the AP device may receive, by using a part of RUs of the target channel, a data frame from the first device, and send a data frame to the first device by using another part of RUs. In other embodiments, the target channel is two channels at a frequency in the AP device. When the first device uses the full-duplex communication mode, the AP device may receive a data frame from the first device by using one channel, and send a data frame to the first device by using the other channel.

In this implementation, the AP device flexibly configures the target channel, so that the AP device can communicate with the first device by using a plurality of transmission modes. In this way, full-duplex communication can be implemented, the transmission delay can be reduced, and flexibility is relatively high.

In an optional design, the method further includes: if the target channel is idle, the AP device sends a second control message to the first device by using the target channel, where the second control message includes the information indicating that the AP device uses the full-duplex mode for data frame transmission, the time period, and information for indicating the first device to use a half-duplex mode for data frame transmission with the AP device. In this implementation, operation flexibility between the AP device and the first device is higher. Therefore, this solution is applicable more widely.

In an optional design, the control message includes a frame control (frame control) field, a duration (duration) field, and a communication mode indication field. The duration field is used to indicate the time period in which the AP device occupies the target channel. A start time of the time period may be a time at which the AP device sends the control message. The communication mode indication field is used to indicate a communication mode used by at least one of the AP device and the first device.

In some embodiments, the communication mode indication field may be implemented as one field, the field may include at least two bits, one part of the at least two bits indicate a communication mode of a transmitter, and the other part of the fields indicate a communication mode of a receiver. In other embodiments, the communication mode indication field includes a transmitter communication mode indication field and a receiver communication mode indication field.

In an optional design, the AP device receives the first data frame and sends the first ACK frame by using a first group of resource units, where the first group of resource units occupies a part of a bandwidth of the target channel. In some embodiments, when the first device uses the half-duplex communication mode, the AP device may perform data interaction with the first device by using a part of RUs of the target channel, and perform data interaction with another device by using another part of RUs, to implement full-duplex communication on the AP device. In this implementation, the AP device flexibly configures the target channel, so that the AP device can communicate with the first device by using a plurality of transmission modes. In this way, full-duplex communication can be implemented, the transmission delay can be reduced, and flexibility is relatively high.

In an optional design, the first control message and the second control message further include transmission mode information, and the transmission mode information indicates information about use of the target channel by at least one of the AP device and the first device. Corresponding to implementations of the target channel, this application provides a plurality of transmission modes. Based on this, the AP device and the first device may determine a most suitable transmission mode based on a requirement of transmitted data. In this implementation, full-duplex communication can be implemented, the transmission delay can be reduced, and flexibility is relatively high.

In an optional design, after the AP device sends the second data frame to the first device in the time period by using the target channel, the method further includes: the AP device performs noise reduction on echo noise corresponding to the second data frame, so that a signal-to-noise ratio of the first data frame meets a receiving condition. In a conventional Wi-Fi communication process, after a signal is sent by an electronic device, echo noise is generated, and the echo noise interferes with a signal received by the electronic device from a peer device. Based on this, after sending the second data frame, the AP device may perform noise reduction on the echo noise corresponding to the second data frame, so that the signal-to-noise ratio of the first data frame meets the receiving condition, thereby implementing full-duplex communication.

According to a second aspect, an embodiment of this application provides a wireless Wi-Fi communication method. The method includes the following steps: A first device receives a first control message from an AP device by using a target channel, where the first control message includes information indicating that the AP device uses a full-duplex mode for data frame transmission and a time period in which the AP device occupies the target channel; the first device determines, based on the time period, a time for sending a first data frame, where the sending time is in the time period; and the first device sends the first data frame to the AP device at the sending time by using the target channel.

The first device may be an ONT device, a station device, or an AP device. The first device is connected to the AP device by using the target channel. In this application, the first device may support the full-duplex communication mode and a half-duplex communication mode, or support only a half-duplex communication mode. Based on this, the first device may determine, under control of an indication of the AP device, a communication mode to be used. In addition, to ensure full-duplex communication of the AP device, after learning the time period in which the AP device occupies the target channel, the first device may send the first data frame to the AP device by using the target channel in the time period in which the AP device occupies the target channel. In this way, a transmission delay can be reduced.

In an optional design, after the first device sends the first data frame to the AP device at the sending time by using the target channel, the method further includes: the first device receives a first acknowledgement ACK frame from the AP device in the time period by using the target channel, where the first ACK frame is an ACK frame for the first data frame. After sending the first data frame to the AP device, the first device should receive the first ACK frame returned by the AP device, to ensure reliability of communication between the AP device and the first device.

In an optional design, the first control message further includes information for indicating the first device to use the full-duplex mode for data frame transmission with the AP device, and the method further includes: the first device receives a second data frame from the AP device in the time period by using the target channel; and the first device sends a second ACK frame to the AP device in the time period by using the target channel, where the second ACK frame is an ACK frame for the second data frame. In some embodiments, the first device may use, in response to an indication of the AP device, the full-duplex communication mode to communicate with the AP device. In this implementation, operation flexibility between the first device and the AP device is higher. Therefore, this solution is applicable more widely.

In an optional design, the first device sends the first data frame and the second ACK frame by using a first group of resource units; and the first device receives the second data frame and the first ACK frame by using a second group of resource units, where the first group of resource units and the second group of resource units form the target channel. In this implementation, the AP device flexibly configures the target channel, so that the AP device can communicate with the first device by using a plurality of transmission modes. In this way, full-duplex communication can be implemented, the transmission delay can be reduced, and flexibility is relatively high.

In an optional design, the method further includes: the first device receives a second control message from the AP device by using the target channel, where the second control message includes the information indicating that the AP device uses the full-duplex mode for data frame transmission, the time period, and information for indicating the first device to use a half-duplex mode for data frame transmission with the AP device. In some embodiments, the first device may use, in response to an indication of the AP device, the half-duplex communication mode to communicate with the AP device. In this implementation, operation flexibility between the first device and the AP device is higher. Therefore, this solution is applicable more widely.

In an optional design, the first device sends the first data frame and receives the first ACK frame by using a first group of resource units, where the first group of resource units occupies a part of a bandwidth of the target channel. In this implementation, the AP device flexibly configures the target channel, so that the AP device can communicate with the first device by using a plurality of transmission modes. In this way, full-duplex communication can be implemented, the transmission delay can be reduced, and flexibility is relatively high.

In an optional design, that the first device determines, based on the time period, a time for sending a first data frame includes: the first device determines, based on the time period, a time at which the AP device completes sending of the data frame; the first device determines a transmission rate of the first data frame on the target channel; the first device determines transmission duration of the first data frame on the target channel based on the transmission rate and a data volume of the first data frame; and the first device obtains the sending time by subtracting the transmission duration from the time at which the AP device completes sending of the data frame.

To ensure that at a time when the first data frame arrives at the AP device, the AP device has no data frame that has not been transmitted, the first device needs to determine the time for sending the first data frame. For example, the first device may determine, based on the time period, a time at which the data frame transmission of the AP device is completed (hereinafter referred to as a "completion time"). Then the first device subtracts the transmission duration of the first data frame from the completion time, to obtain the time for sending the first data frame. The first device may determine the transmission duration based on a data volume of the first data frame and the transmission rate of the first data frame.

In this implementation, it can be ensured that, at the time when the first data frame arrives at the AP device, the AP device has no data frame that has not been transmitted, and collision with the sending of the first ACK frame is avoided. Therefore, it is ensured that the AP device can smoothly use the full-duplex communication mode for data transmission.

In an optional design, the method further includes: the first device reads transmission mode information from the first control message or the second control message, where the transmission mode information indicates information about use of the target channel by at least one of the AP device and the first device; and the first device transmits a data frame based on the transmission mode information by using the target channel. Corresponding to implementations of the target channel, this application provides a plurality of transmission modes. Based on this, the first device and the AP device may determine a most suitable transmission mode based on a requirement of transmitted data. In this implementation, full-duplex communication can be implemented, the transmission delay can be reduced, and flexibility is relatively high.

According to a third aspect, an embodiment of this application provides an AP device. The device includes functional modules configured to perform steps of the method in the first aspect and the implementations of the first aspect.

According to a fourth aspect, an embodiment of this application provides an electronic device used as a first device. The device includes functional modules configured to perform steps of the method in the second aspect and the implementations of the second aspect.

According to a fifth aspect, an embodiment of this application provides an AP device, including a transceiver, a processor, and a memory. The transceiver, the processor, and the memory may be connected through a bus system. The transceiver is configured to transmit data to or receive data from a first device. The memory is configured to store a program, instructions, or code, and the processor is configured to execute the program, the instructions, or the code in the memory to implement the method in any one of the first aspect or the possible designs in the first aspect.

According to a sixth aspect, an embodiment of this application provides an electronic device used as a first device. The device includes a transceiver, a processor, and a memory. The transceiver, the processor, and the memory may be connected through a bus system. The transceiver is configured to transmit data to or receive data from an AP device. The memory is configured to store a program, instructions, or code, and the processor is configured to execute the program, the instructions, or the code in the memory to implement the method performed by the first device in any one of the second aspect or the possible designs of the second aspect.

According to a seventh aspect, an embodiment of this application provides a Wi-Fi communications system, including an AP device and a first device that are connected to each other. The AP device is the AP device in the third aspect or the fifth aspect, and the first device is the first device in the fourth aspect or the sixth aspect.

According to an eighth aspect, this application provides a computer-readable storage medium. The computer-readable storage medium stores instructions. When the instructions are run on a computer, the computer is enabled to perform the method in any one of the first aspect, the second aspect, the possible designs of the first aspect, or the possible designs of the second aspect.

To resolve the problem existing in the existing Wi-Fi communication mechanism, the AP device in embodiments of this application uses the full-duplex communication mode. After determining that the target channel is idle, the AP device may determine the time period for occupying the target channel, then notify the first device of the time period by using the control message, and indicate the communication mode to be used by the first device. Then the first device determines the time for sending the data frame to the AP device in the time period, and sends the data frame to the AP device by using the communication mode indicated by the AP device. Therefore, it is ensured that the AP device implements full-duplex data transmission, and further, the transmission delay can be shortened.

### BRIEF DESCRIPTION OF DRAWINGS

To describe technical solutions in embodiments of this application more clearly, the following briefly describes the accompanying drawings for describing embodiments. It is clear that a person of ordinary skill in the art may still derive other drawings from these accompanying drawings without creative efforts.
FIG. 1 is a schematic diagram of a structure of a Wi-Fi communications system 10 according to an embodiment of this application;
FIG. 2 is a signaling interaction diagram of a Wi-Fi communication method 100 according to an embodiment of this application;
FIG. 3A is a diagram of a structure of an example data frame of a control message according to an embodiment of this application;
FIG. 3B is a diagram of a structure of an example data frame of a clear to send (clear to send, CTS) message according to an embodiment of this application;
FIG. 4A is a schematic diagram of a first example implementation scenario of a target channel according to an embodiment of this application;
FIG. 4B is a schematic diagram of a second example implementation scenario of a target channel according to an embodiment of this application;

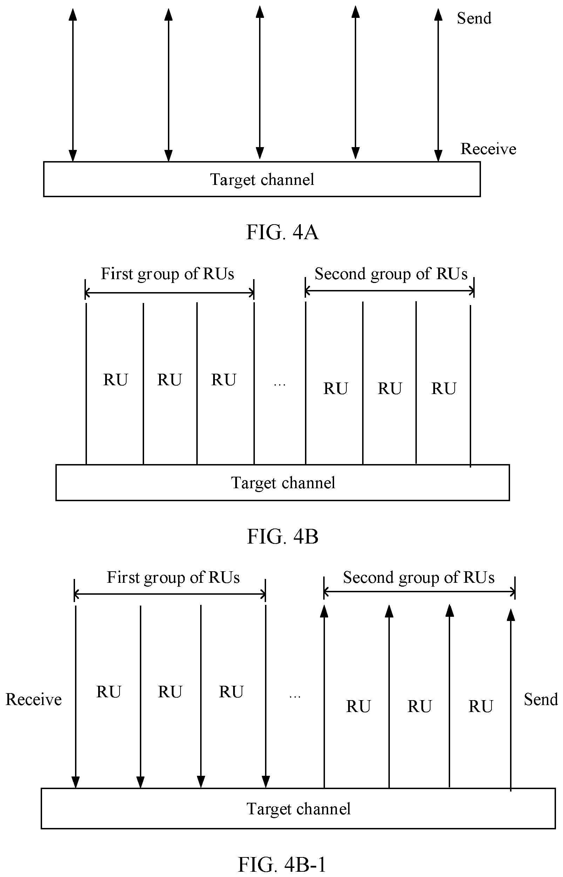

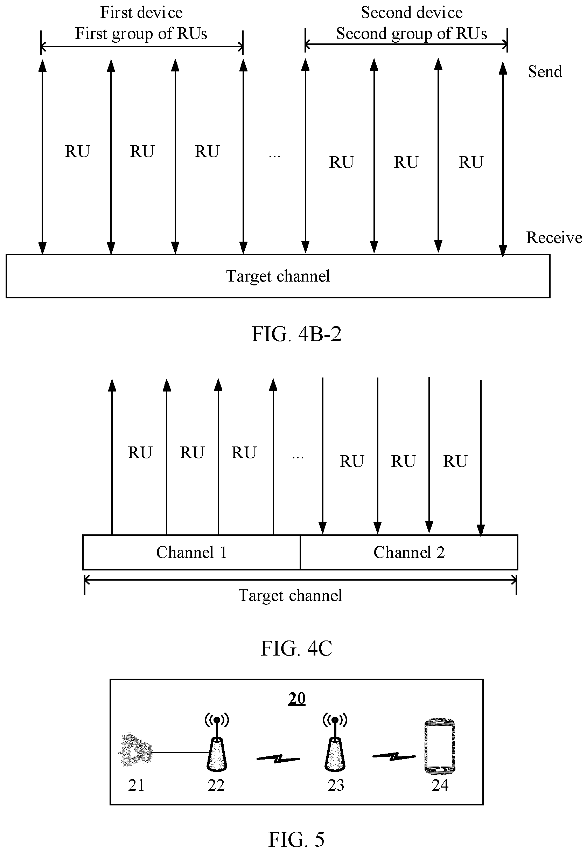

FIG. 4B-1 is a schematic diagram of a first example usage scenario of the target channel in FIG. 4B according to an embodiment of this application;
FIG. 4B-2 is a schematic diagram of a second example usage scenario of the target channel in FIG. 4B according to an embodiment of this application;
FIG. 4C is a schematic diagram of a third example implementation scenario of a target channel according to an embodiment of this application;
FIG. 5 is a schematic diagram of a structure of a Wi-Fi communications system 20 according to an embodiment of this application;

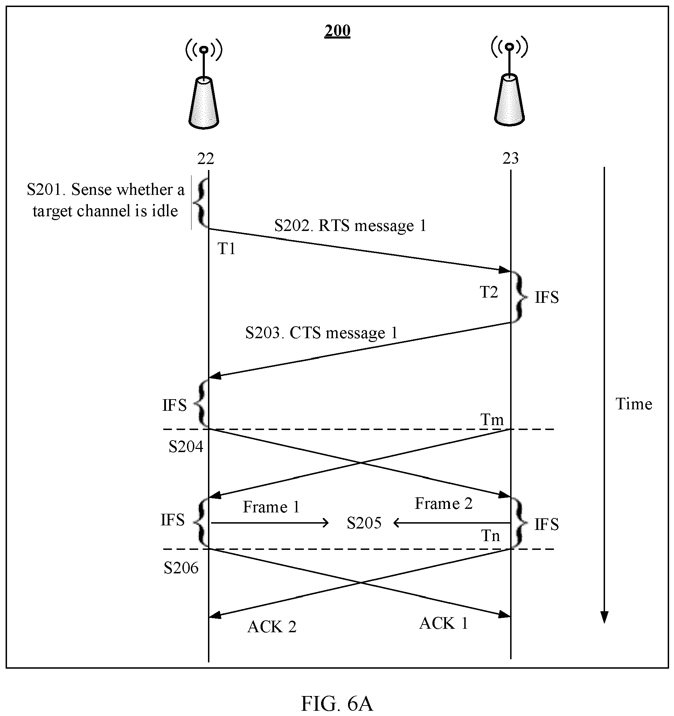

FIG. 6A is a schematic diagram of an execution time sequence of a Wi-Fi communication method 200 according to an embodiment of this application;

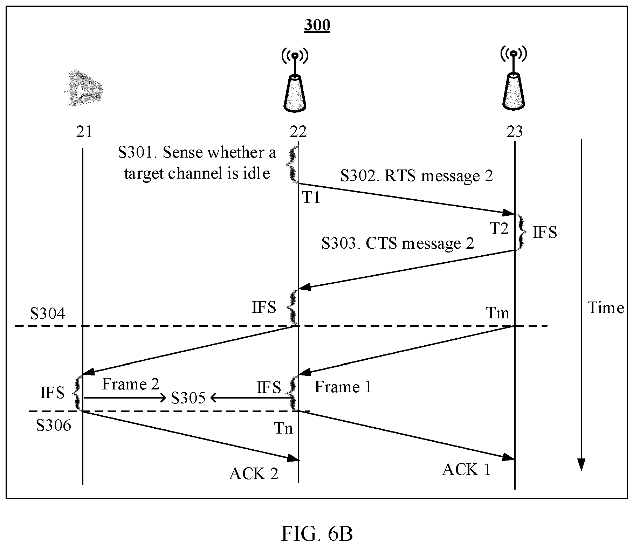

FIG. 6B is a schematic diagram of an execution time sequence of a Wi-Fi communication method 300 according to an embodiment of this application;

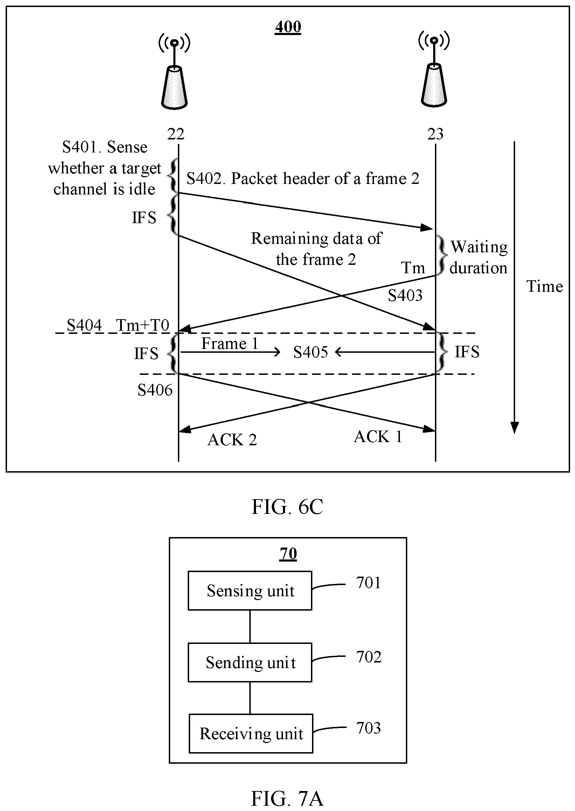

FIG. 6C is a schematic diagram of an execution time sequence of a Wi-Fi communication method 400 according to an embodiment of this application;
FIG. 7A is a schematic diagram of example composition of anAP device 70 according to this application;

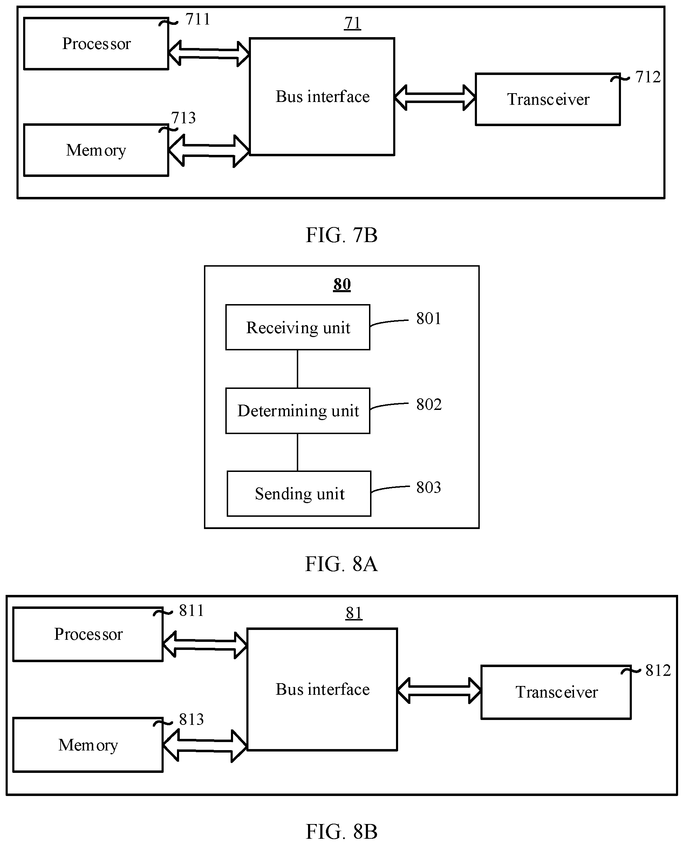

FIG. 7B is a schematic diagram of an example structure of an AP device 71 according to this application;
FIG. 8A is a schematic diagram of example composition of an electronic device 80 according to this application; and
FIG. 8B is a schematic diagram of an example structure of an electronic device 81 according to this application.

### DESCRIPTION OF EMBODIMENTS

The following clearly describes technical solutions in this application with reference to the accompanying drawings in this application.

Terms used in the following embodiments of this application are merely for the purpose of describing specific embodiments, but are not intended to limit this application. The terms "one", "one type of", "the", "the foregoing", "this", "the one" of singular forms used in this specification and the appended claims of this application are also intended to include plural forms, unless otherwise specified in the context clearly. It should also be understood that although the terms first, second, and the like may be used to describe a class of objects in the following embodiments, the objects should not be limited to these terms. These terms are used only to distinguish between specific objects of this class of objects. For example, the terms "first", "second", and the like may be used to describe data frames in the following embodiments. However, data frames in this application should not be limited to these terms. These terms are used only to distinguish between different data frames.

The following describes example implementation scenarios of this application.

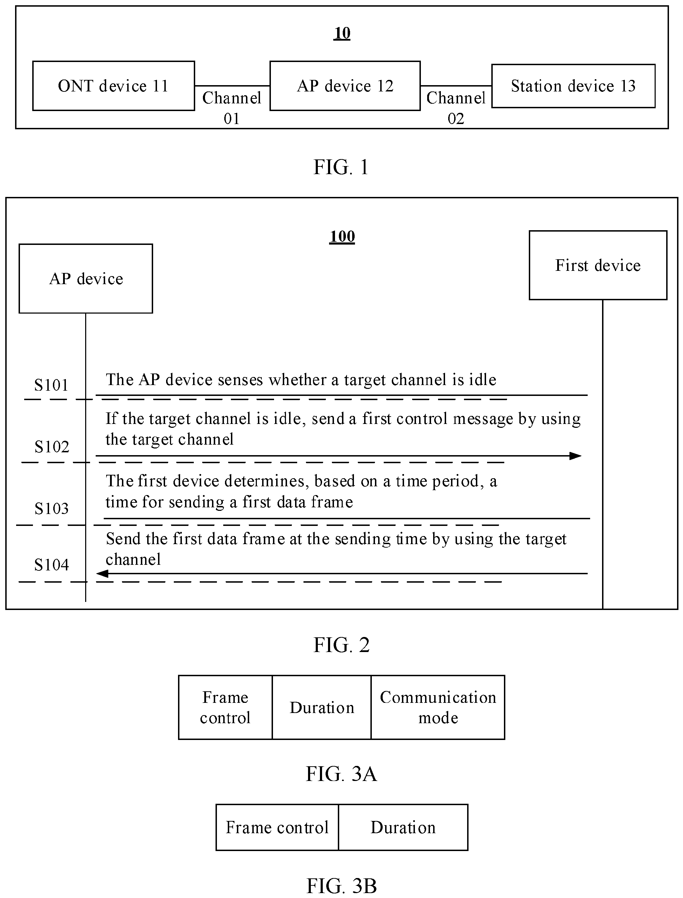

FIG. 1 illustrates a Wi-Fi communications system 10. The Wi-Fi communications system 10 includes an optical network terminal (optic network terminal, ONT) device 11, an access point (access point, AP) device 12, and a station (station, STA) device 13. The station device 13 may access, by using the AP device 12, a Wi-Fi network provided by the ONT device 11.

The ONT device 11 may convert an optical signal into an Ethernet signal, configure a network bandwidth, and the like. In this embodiment, the ONT device 11 may be used as a gateway device at an Ethernet interface. The ONT device 11 may use the AP device 12 as a relay access station device 13, and the ONT device 11 may use the AP device 12 as a forwarding device to communicate with the station device 13.

The AP device 12 in this application may be used as a "wireless access node" in a wireless network. On one hand, the AP device 12 may expand coverage of network signals provided by the ONT device 11, to connect more wireless clients (for example, the station device 13) to the wireless network. On the other hand, the AP device 12 may further forward communication data between the ONT device 11 and the station device 13. The AP device 12 may include a router, a switch, a wireless network adapter, a modem, or the like.

The station device 13 may be any device that supports a wireless network connection, including a smartphone, a tablet computer, a smart home device, an industrial control device, a vehicle device, or the like. In this application, the terminal 11 may include but is not limited to an electronic device in which iOS^{®}, Android^{®}, Microsoft^{®}, or another operating system is installed.

It may be understood that both the AP device 12 and the station device 13 shown in FIG. 1 are defined at logical function layers. In actual implementation, the Wi-Fi communications system 10 may include at least one AP device entity and at least one station device entity. For example, the ONT device 11 in the Wi-Fi communications system 10 may be connected to a plurality of station device entities. In some embodiments, one AP device entity may be connected between the ONT device 11 and a station device entity. In other embodiments, two AP device entities may be connected between the ONT device 11 and a station device entity. This is not limited herein.

With reference to FIG. 1, for example, the AP device 12 is connected to the ONT device 11 by using a channel 01, and is connected to the station device 13 by using a channel 02. For example, a transmission process of a downlink signal is: the ONT device 11 sends the downlink signal to the AP device 12 by using the channel 01, and then the AP device 12 sends the downlink signal to the station device 13 by using the channel 02. For example, a transmission process of an uplink signal is: the station device 13 sends the uplink signal to the AP device 12 by using the channel 02, and then the AP device 12 sends the uplink signal to the ONT device 11 by using the channel 01.

As defined in an existing Wi-Fi communication protocol, each device in the Wi-Fi communications system 10 uses a half-duplex mode for signal transmission. Using the AP device 12 as an example, in a process of using the channel 01, the AP device 12 can only send an uplink signal to the ONT device 11 by using the channel 01, or can only receive a downlink signal from the ONT device 11, but cannot simultaneously send an uplink signal and receive a downlink signal by using the channel 01. Similarly, in a process of using the channel 02, the AP device 12 can only send a downlink signal to the station device 13 by using the channel 02, or can only receive an uplink signal from the station device 13, but cannot simultaneously send an uplink signal and receive a downlink signal by using the channel 02. For example, before sending a signal by using any channel, the AP device 12 needs to sense whether the corresponding channel is idle. If the corresponding channel is idle, the AP device 12 sends the signal by using the corresponding channel. Otherwise, the corresponding channel is being occupied by another device, or is transmitting a signal to be received by the AP device 12. It can be learned that an existing Wi-Fi communication mechanism causes a relatively long transmission delay between the ONT device 11 and the station device 13.

Embodiments of this application provide a Wi-Fi communication method and an electronic device. After determining that a target channel is idle, an AP device can occupy the target channel, and further indicate a peer device to send a data frame to the AP device in an occupation time period. In this way, after occupying the target channel, the AP device not only can send a data frame by using the target channel, but also can indicate the peer device to send a data frame by using the target channel, thereby implementing full-duplex communication and further shortening a transmission delay.

It should be understood that embodiments of this application are further applicable to other future-oriented communications technologies. A system architecture, a device, and a service scenario described in this application are intended to more clearly describe the technical solutions in this application, but are not intended to limit the technical solutions provided in this application. A person of ordinary skill in the art may know that as the system architecture evolves and a new service scenario emerges, the technical solutions provided in this application are also applicable to a similar technical problem.

For example, with reference to the Wi-Fi communications system 10, this application provides an embodiment of a Wi-Fi communication method. Referring to FIG. 2, the Wi-Fi communication method 100 (hereinafter referred to as the method 100) provided in this application may include the following steps.

Step S 101: An AP device senses whether a target channel is idle.

The AP device is a device that supports a full-duplex communication mode. The full-duplex communication mode means that after the AP device senses that a channel is idle, the AP device is further allowed to receive a data frame by using the channel in a process of sending a data frame by using the channel. The target channel is a channel to which the AP device is connected. The target channel is a frequency band corresponding to any frequency in the AP device. For an embodiment related to the target channel, refer to the following description in this specification. Details are not described herein.

Step S 102: If the target channel is idle, the AP device sends a first control message to a first device by using the target channel.

The first device is a device that has established a connection to the AP device by using the target channel. The first device may be an ONT device, a station device, or an AP device.

The first control message may include information indicating that the AP device uses the full-duplex mode for data frame transmission and information about a time period in which the AP device occupies the target channel. Based on this, the first control message may enable the first device to send a data frame to the AP device by using the target channel in the time period, so that the AP device implements full-duplex transmission. The first control message may be implemented as at least one of a ready to send (ready to send, RTS) message, a data frame packet header, or another message that supports a Wi-Fi communication protocol and can transmit the foregoing functional information. This is not limited herein.

Step S 103: The first device determines, based on the time period, a time for sending a first data frame.

The time for sending the first data frame is in the time period.

It should be noted that, as defined in the Wi-Fi communication protocol, after the AP device receives the first data frame from the first device, the AP device should immediately send a first acknowledgement (acknowledge, ACK) frame to the first device after waiting for an inter frame space (inter frame space, IFS). Based on this, to ensure that at a time when the first data frame arrives at the AP device, the AP device has no data frame that has not been transmitted, the first device needs to determine the time for sending the first data frame. The IFS is an interval frame that is sent before the device uses the channel, to avoid collision with a data frame of a higher priority.

In a possible implementation, the first device may determine, based on the time period, a time at which the data frame transmission of the AP device is completed (hereinafter referred to as a "completion time"). Then the first device determines transmission duration of the first data frame. Further, the first device subtracts the transmission duration from the completion time to obtain the time for sending the first data frame.

The first device may determine the transmission duration based on a data volume of the first data frame and a transmission rate of the first data frame. The first device may negotiate the transmission rate of the first data frame with the AP device. In some embodiments, the first device already knows the data volume of the first data frame. In other embodiments, the first device may determine the data volume of the first data frame.

In a scenario in which the first control message is implemented as an RTS message or another communication message, for example, the first device already knows the data volume of the first data frame. After determining the completion time, the first device may negotiate the transmission rate of the first data frame with the AP device based on the data volume of the first data frame, and further determine the transmission duration of the first data frame.

In a scenario in which the first control message is implemented as a data frame packet header, for example, the first device does not know the data volume of the first data frame. After determining the completion time, the first device may negotiate the transmission rate of the first data frame with the AP device. In this embodiment, the first device may determine, based on the first control message, a data volume of a data frame sent by the AP device. Further, the first device may determine the data volume of the first data frame based on the determined transmission rate and the data volume of the data frame sent by the AP device, where the data volume of the first data frame is less than the data volume of the data frame sent by the AP device. Then the first device determines the transmission duration of the first data frame.

Step S104: The first device sends the first data frame to the AP device at the sending time by using the target channel.

After determining the sending time, the first device may send the first data frame to the AP device at the sending time by using the target channel. Correspondingly, the AP device may receive the first data frame after the time by using the target channel, and a time for receiving the first data frame by the AP device is in the time period.

In some embodiments, the first device may send the first data frame by using an entire bandwidth of the target channel. In other embodiments, the first device may send the first data frame by using a part of the bandwidth of the target channel. For an implementation of the target channel and an embodiment in which the first device occupies the target channel, refer to the following description in this specification. Details are not described herein.

It may be understood that, after determining the sending time, the first device waits for specific duration before the sending time arrives, and the waiting duration of the first device is related to the data volume of the first data frame. In some embodiments, the data volume of the first data frame is relatively small, so that the transmission duration of the first data frame is relatively short. To ensure that the AP device has completed data frame transmission at the time when the first data frame arrives at the AP device, the first device waits for relatively long duration. In other embodiments, the data volume of the first data frame is relatively large, so that the transmission duration of the first data frame is relatively long. To ensure that the first device has completed sending of the first data frame when receiving the data frame from the AP device, the waiting duration of the first device is relatively short. This is not limited herein.

Further, on a basis of the foregoing steps, after receiving the first data frame, the AP device may further send the first ACK frame to the first device by using the target channel. For a frame structure of the first ACK frame and meanings of fields in the first ACK frame, refer to related descriptions in the IEEE 802.11 standard protocol. Details are not described herein.

In addition, the bandwidth of the target channel occupied when the AP device sends the first ACK frame is related to an implementation of the target channel and a communication mode of the first device. For details, refer to the following description in this specification. Details are not described herein.

In this embodiment, the AP device supports the full-duplex communication mode, and the AP device may sense whether the target channel connected to the AP device is idle. When determining that the target channel is idle, the AP device may determine the time period for occupying the target channel. Then the AP device may send the control message to the first device. The first device is an electronic device that has established a connection to the AP device by using the target channel. The control message is used to notify the first device that the AP device uses the full-duplex mode for data frame transmission, and is further used to indicate a time for sending the data frame by the first device, and the like. For example, the control message includes the information indicating that the AP device uses the full-duplex communication mode and the time period in which the AP device occupies the target channel. After learning the time period in which the AP device occupies the target channel, the first device may determine the time for sending the data frame to the AP device, and then send the data frame to the AP device at the determined time by using the target channel, so that the AP device implements full-duplex transmission.

It can be learned that, in the implementation of this application, after sensing that the target channel is idle, the AP device may determine the time period for occupying the target channel, add the time period to the control message, and send the control message to the first device. Then the first device determines, in response to the indication of the control message, the time for sending the data frame to the AP device in the time period. In this way, in the time period for occupying the target channel, the AP device can control the first device to send the data frame to the AP device by using the target channel, thereby implementing full-duplex data frame transmission and further shortening a transmission delay.

The foregoing embodiment clearly indicates that the AP device uses the full-duplex communication mode. In actual implementation, the first device may support the full-duplex communication mode and a half-duplex communication mode, or support only a half-duplex communication mode. Further, in this application, the AP device may further indicate the communication mode of the first device by using the control message.

In some embodiments, for example, the first device in the method 100 uses the full-duplex communication mode to perform data interaction with the AP device. Correspondingly, the first control message may further include information for indicating the first device to use the full-duplex mode for data frame transmission with the AP device. In other embodiments, the AP device may further indicate the first device to use the half-duplex communication mode for data interaction with the AP device. For example, in this embodiment, after determining that the target channel is idle, the AP device may send a second control message to the first device by using the target channel. The second control message includes information indicating that the AP device uses the full-duplex mode for data frame transmission, a time period, and information for indicating the first device to use the half-duplex mode for data frame transmission with the AP device. After the AP device sends the second control message to the first device, an implementation process of the AP device and an implementation process of the first device are similar to those in the embodiment shown in the method 100, and details are not described herein again.

For example, as shown in FIG. 3A, a data frame of the control message may include a frame control (frame control) field, a duration (duration) field, and a communication mode indication field. The frame control field is used to indicate a function of the control message, or the like. The duration field is used to indicate the time period in which the AP device occupies the target channel. A start time of the time period may be a time at which the AP device sends the control message. The communication mode indication field is used to indicate a communication mode used by at least one of the AP device and the first device. In this application, the communication mode indication field indicates at least that the AP device uses the full-duplex communication mode for communication. In some embodiments, the communication mode indication field may alternatively be set to indicate only the communication mode of the first device. In other embodiments, the communication mode indication field may be further set to indicate the communication mode of the AP device and the communication mode of the first device. This is not limited herein.

In some embodiments, the communication mode indication field may be implemented as one field, and the field may include at least two bits. A most significant bit in the at least two bits is used to indicate a communication mode of a transmitter, and a least significant bit is used to indicate a communication mode of a receiver. For example, the communication mode indication field includes two bits. When a value of a more significant bit in the two bits is 1, for example, it indicates that the AP device uses the full-duplex communication mode for communication. When the value of the more significant bit is 0, for example, it indicates that the AP device uses the half-duplex communication mode for communication. When a value of a less significant bit in the two bits is 1, for example, it indicates that the first device uses the full-duplex communication mode for communication. When the value of the less significant bit is 0, for example, it indicates that the first device uses the half-duplex communication mode for communication. Further, a value of a communication mode indication field in the first control message is, for example, "11", indicating that the AP device uses the full-duplex communication mode for communication, and that the first device uses the full-duplex communication mode for communication. A value of a communication mode indication field in the second control message is "10", indicating that the AP device uses the full-duplex communication mode for communication, and that the first device uses the half-duplex communication mode for communication.

It may be understood that the foregoing embodiment of the communication mode indication field is merely an example for description, and does not constitute a limitation on the communication mode indication field in this application. In other embodiments, the communication mode indication field may alternatively be implemented as follows: The least significant bit in the bits is used to indicate the communication mode of the transmitter, and the most significant bit is used to indicate the communication mode of the receiver. A bit value 0 may indicate the full-duplex communication mode, and a bit value 1 may also indicate the half-duplex communication mode. Bits in the communication mode indication field are not limited to two bits, or the like.

In other embodiments, the communication mode indication field includes a transmitter communication mode indication field and a receiver communication mode indication field. In this embodiment of this application, the transmitter communication mode indication field is used to indicate the communication mode of the AP device, and the receiver communication mode indication field is used to indicate the communication mode of the first device.

The transmitter communication mode indication field indicates that the communication mode of the AP device is full duplex. For example, if a length of the transmitter communication mode indication field is one bit, and in some embodiments, when a value of the bit is "1", it indicates that the communication mode of the AP device is full duplex. In this case, the value of the bit in the first control message is "1". In other embodiments, when the value of the bit is "0", it indicates that the communication mode of the AP device is full duplex. In this case, the value of the bit in the first control message is "0".

In addition, if a length of the receiver communication mode indication field is one bit, when a value of the bit is "1", for example, it indicates that the first device uses the full-duplex communication mode, or when a value of the bit is "0", for example, it indicates that the first device uses the half-duplex communication mode. Correspondingly, a value of the receiver communication mode indication field in the first control message is "1", and a value of the receiver communication mode indication field in the second control message is "0".

It may be understood that the embodiment corresponding to the transmitter communication mode indication field and the embodiment corresponding to the receiver communication mode indication field are merely examples for description, and do not constitute a limitation on the control message in this application. In other embodiments, the length of the transmitter communication mode indication field may alternatively be another value, and the length of the receiver communication mode indication field may alternatively be another value. This is not limited herein.

In other embodiments, the control message may further include a receiver address (receiver address) field, a transmitter address (transmitter address) field, a frame check sequence (frame check sequence, FCS) field, and the like. This is not limited herein. For a meaning of the receiver address field, a meaning of the transmitter address field, and a meaning of the FCS field, refer to related descriptions in the IEEE 802.11 standard protocol. Details are not described herein.

It may be understood that the foregoing embodiment is merely an example for description of the control message, and does not constitute a limitation on the control message in this application. In other embodiments, the control message may further include more extension fields or fewer fields. This is not limited herein.

In this implementation of this embodiment, the AP device may notify, by using the control message, the first device of information such as the communication mode of the AP device, the time period for occupying the target channel, and the communication mode to be used by the first device, so that the first device can send the data frame to the AP device in the time period in which the AP device occupies the target channel, thereby ensuring that the AP device performs full-duplex transmission by using the target channel.

Further, if the control message is an RTS message, in some embodiments, after receiving the control message, the first device sends a clear to send (clear to send, CTS) message to the AP device.

For example, as shown in FIG. 3B, a data frame of the CTS message may include a frame control field and a duration field. The frame control field in this embodiment is used to indicate a function of the CTS message, or the like. The duration field in the CTS message indicates a time period in which the first device occupies the target channel, and a start time of the time period is a time at which the first device receives the control message.

In other embodiments, the CTS message may further include a receiver address field and an FCS field. For a meaning of the receiver address field and a meaning of the FCS field, refer to related descriptions in the IEEE 802.11 standard protocol. Details are not described herein.

With reference to the foregoing description of the embodiment of the communication mode of the first device, the following describes communication embodiments of the AP device in different implementation scenarios.

In some embodiments, if the first device uses the full-duplex communication mode to perform data interaction with the AP device, the AP device may further send a second data frame to the first device by using the target channel in the foregoing time period. Correspondingly, in this embodiment, after receiving the second data frame, the first device may further send a second ACK frame to the AP device by using the target channel. The second ACK frame is an acknowledgement frame for receiving the second data frame by the first device. In this way, in a state in which the target channel is idle, the first device can not only send a data frame but also receive a data frame by using the target channel, thereby implementing full-duplex communication with the AP device.

In other embodiments, if the first device uses the half-duplex communication mode to perform data interaction with the AP device, the first device is only allowed to send a data frame to the AP device by using the target channel, and is not allowed to send and receive data frames simultaneously by using the target channel. Based on this, in this embodiment, the AP device does not send a data frame to the first device by using the target channel, but the AP device may send a second data frame to a second device by using the target channel, and receive a second ACK frame from the second device by using the target channel. The second device is an electronic device that has established a Wi-Fi connection to the AP device by using the target channel.

For example, in a scenario in which the first device uses the half-duplex communication mode for data frame transmission, the first device may autonomously sense whether a channel connected to the first device is idle, and further, when the channel connected to the first device is idle, the first device sends the data frame by using the corresponding channel. The channel connected to the first device includes the target channel.

It should be noted that, in some embodiments, the time at which the first device sends the first data frame may be the same as a time at which the AP device sends the second data frame. Correspondingly, in this embodiment, a time at which the first device receives the first ACK frame may also be the same as a time at which the AP device receives the second ACK frame. In other embodiments, the AP device may send the second data frame at a time when the first data frame is received. In other embodiments, the time at which the AP device sends the second data frame may be later than the time at which the first device sends the first data frame, and earlier than the time at which the AP device receives the first data frame. This is not limited in this application. It can be learned that, in the implementation of this application, the full-duplex communication mode of the AP device is relatively flexible and has wide applicability.

Further, to ensure that the first data frame is sent at the time when the AP device sends the second data frame, the first device can determine, based on the time period in the control message, the time at which the AP device sends the second data frame, and further send the first data frame to the AP device at the corresponding time. For an embodiment in which the first device determines the sending time, refer to the foregoing description. Details are not described herein.

In addition, in some embodiments, to ensure that the time for sending the first ACK frame is consistent with the time for sending the second ACK frame, the first device may further determine the transmission duration of the first data frame in the process of determining the time for sending the first data frame. The transmission duration of the first data frame is related to the bandwidth of the target channel occupied by the first device. For details, refer to the following description in this specification. Details are not described herein.

It should be noted that, in a conventional Wi-Fi communication process, a signal sent by the electronic device is received by an antenna of the electronic device, and the received signal is referred to as echo noise of the sent signal. The echo noise interferes with a signal received by the electronic device from a peer device. Therefore, a signal-to-noise ratio of the received signal is relatively low, and the received signal cannot be identified.

Based on this, to use the full-duplex communication mode for data frame transmission, after sending the second data frame, the AP device may perform noise reduction on echo noise corresponding to the second data frame, so that a signal-to-noise ratio of the first data frame meets a receiving condition. Similarly, if the first device uses the full-duplex communication mode for data frame transmission, after sending the first data frame, the first device performs noise reduction on echo noise corresponding to the first data frame, so that a signal-to-noise ratio of the second data frame meets a receiving condition.

When the bandwidth of the target channel occupied by the data frame in the transmission process varies, a noise reduction value of the echo noise also varies. Details are not described herein.

The following describes the target channel in the foregoing embodiments of this application with reference to accompanying drawings.

The AP device can usually support at least one frequency. The frequency may correspond to a frequency range, and the corresponding frequency range may be divided into a plurality of frequency bands used to transmit wireless electromagnetic wave signals, where any frequency band used to transmit a wireless electromagnetic wave signal may be referred to as one channel. For example, the frequency supported by the AP device includes 2.4 GHz, and the frequency range provided by 2.4 GHz is, for example, 2.412 GHz (GHz) to 2.484 GHz. For example, the frequency range may be divided into 13 channels, and a bandwidth of each channel is, for example, 20 megahertz (MHz).

Further, for ease of communication resource scheduling, in this application, one channel may be divided into a plurality of resource units (resource unit, RU), and further, an RU is used as a minimum unit for communication resource scheduling. A quantity of RUs obtained by dividing one channel is related to a determined RU size. For example, a total bandwidth of a channel is 20 MHz, that is, the channel includes 256 subcarriers. If one RU is 26 subcarriers, the channel may include nine RUs. The RU size may be determined based on a specification of a resource unit in the 802.11ax protocol. Details are not described herein.

Based on the foregoing description, the target channel in this application includes the following three possible implementations.

### Implementation 1:

Referring to FIG. 4A, the target channel is a frequency band corresponding to a frequency in the AP device. When sending the second data frame and the first ACK frame by using the target channel, the AP device occupies the entire bandwidth of the target channel. When receiving the first data frame and the second ACK frame by using the target channel, the AP device also occupies the entire bandwidth of the target channel.

In this implementation, the first device usually uses the full-duplex communication mode to communicate with the AP device. Based on this, the first device applied to this implementation scenario should support the full-duplex communication mode. In addition, the AP device should send the first control message to the first device. In addition, in this implementation, the AP device and the first device may simultaneously send data frames. For a related embodiment in which the AP device and the first device simultaneously send data frames, refer to the foregoing description. Details are not described herein.

It should be noted that, in this embodiment, a frequency band of a signal sent by the AP device is the same as a frequency band of a received signal. Therefore, echo noise has relatively large impact on the received signal. Based on this, if the implementation of the target channel is shown in FIG. 4A, after sending the second data frame, the AP device may reduce signal strength of echo noise corresponding to the second data frame to less than a first threshold, so that a signal-to-noise ratio of the received first data frame meets a receiving condition. The first threshold may be determined based on signal strength of the received first data frame.

This implementation can be used to maximize spectrum utilization of the target channel, thereby saving transmission resources.

### Implementation 2:

Referring to FIG. 4B, the target channel is a frequency band corresponding to a frequency in the AP device. The frequency band is divided into a plurality of RUs, and the plurality of RUs may be classified into a first group of RUs and a second group of RUs.

In some embodiments, the AP device may receive a data frame by using the first group of RUs, and send a data frame by using the second group of RUs. Alternatively, the AP device may send a data frame by using the first group of RUs, and receive a data frame by using the second group of RUs. For example, in a scenario in which the first device uses the full-duplex communication mode to communicate with the AP device, as shown in FIG. 4B-1, the AP device receives the first data frame and the second ACK frame by using the first group of RUs, and sends the first ACK frame and the second data frame by using the second group of RUs. Correspondingly, the first device sends the first data frame and the second ACK frame by using the first group of RUs, and receives the first ACK frame and the second data frame by using the second group of RUs.

In other embodiments, the AP device may communicate with the first device and the second device by using the target channel. In actual implementation, the AP device may communicate with the first device by using the first group of RUs, and communicate with the second device by using the second group of RUs. Alternatively, the AP device may communicate with the first device by using the second group of RUs, and communicate with the second device by using the first group of RUs. In this embodiment, both the first device and the second device use the half-duplex communication mode to communicate with the AP device. For example, in a scenario in which the first device uses the half-duplex communication mode to communicate with the AP device, as shown in FIG. 4B-2, the AP device receives the first data frame and sends the first ACK frame by using the first group of RUs. The AP device sends the second data frame and receives the second ACK frame by using the second group of RUs. Correspondingly, the first device sends the first data frame and receives the first ACK frame by using the first group of RUs. The second device receives the second data frame and sends the second ACK frame by using the second group of RUs.

It may be understood that a size of the first group of RUs and a size of the second group of RUs may be determined based on bandwidth requirements of data transmitted by the first group of RUs and the second group of RUs. In some embodiments, the size of the first group of RUs is the same as the size of the second group of RUs. In other embodiments, the size of the first group of RUs is different from the size of the second group of RUs. This is not limited herein.

### Implementation 3:

Referring to FIG. 4C, the target channel is two frequency bands corresponding to a frequency in the AP device. It can be learned from the foregoing description of the channel at the 2.4 GHz frequency that each frequency band is a channel in a conventional sense. Therefore, in this implementation, the target channel may include, for example, a channel numbered 1 at the 2.4 GHz frequency, which is referred to as a channel 1 herein, and a channel numbered 6 at the 2.4 GHz frequency, which is referred to as a channel 6 herein.

Usually, bandwidths of two channels at one frequency are the same. Therefore, a bandwidth of the channel 1 is the same as a bandwidth of the channel 6. For example, the bandwidth of the channel 1 and the bandwidth of the channel 6 are both 20 MHz. Based on this, the embodiment shown in FIG. 4C is similar to a scenario in which the sizes of the first group of RUs and the second group of RUs are the same in FIG. 4B. Correspondingly, functions of the two channels in FIG. 4C in each implementation scenario are similar to those in the embodiment shown in FIG. 4B, and details are not described herein again.

Although the channel 1 and the channel 6 are used as target channels in FIG. 4C, both the channel 1 and the channel 6 may be used as independent channels by a communications device. Based on this, by using the target channels shown in FIG. 4C, the AP device may further use the full-duplex communication mode to communicate with two devices separately. For example, the AP device establishes a connection to the first device by using the channel 1, and establishes a connection to the second device by using the channel 6. Both the first device and the second device support the full-duplex communication mode. In a possible implementation, the AP device may perform full-duplex communication with the first device by using the channel 1, and the AP device may perform full-duplex communication with the second device by using the channel 6. For an implementation process in which the AP device and any device use the full-duplex communication mode, refer to the description in the foregoing embodiment. Details are not described herein.

In addition, in a scenario in which the first device uses the half-duplex communication mode to communicate with the AP device, the first device communicates with the AP device, for example, by using the channel 1. After receiving the second control message sent by the AP device, the first device may sense whether the channel 1 in FIG. 4C is idle, and further, in a state in which the channel 1 is idle, send the first data frame to the AP device by using the channel 1.

It should be noted that, in the existing technology, although the AP device may use two channels at one frequency, the AP device usually uses the two channels to send data or uses the two channels to receive data, featuring relatively poor flexibility. In the implementation shown in FIG. 4C, the AP device can flexibly configure manners of using the two channels. For example, the AP device may further use either of the channels to send data, and use the other channel to receive data. This not only has higher flexibility, but also can reduce the transmission delay.

In addition, in either of the embodiments in FIG. 4B and FIG. 4C, a frequency band of a signal sent by the AP device is different from a frequency band of a received signal. Therefore, impact of echo noise on the received signal is relatively small. In the implementation 2 and the implementation 3, after sending the second data frame, the AP device may reduce background noise of echo noise corresponding to the second data frame to less than a second threshold, so that the signal-to-noise ratio of the first data frame meets the receiving condition. The second threshold may be determined based on signal strength of the received first data frame.

It may be understood that the target channel shown in FIG. 4A to FIG. 4C is merely an example for description, and does not constitute a limitation on the target channel in this application. In other embodiments, the RU size and a quantity of RUs of the target channel may be flexibly set, and the bandwidth of the channel may be different from that in the foregoing embodiment.

Corresponding to the implementation of the target channel, different transmission modes may be used to transmit data frames in this application. The transmission mode is a mode of data frame transmission of the target channel in the implementation scenarios shown in FIG. 4A to FIG. 4C. Further, in this embodiment of this application, before a data frame is transmitted between the AP device and the first device, a transmission mode may be further selected.

In some embodiments, the control message may include transmission mode information, and the transmission mode information indicates information about use of the target channel by at least one of the AP device and the first device, so that the transmission mode is determined. In other embodiments, the AP device may negotiate the transmission mode with the first device before sensing the target channel.

In summary, the AP device in embodiments of this application uses the full-duplex communication mode. After determining that the target channel is idle, the AP device may determine the time period for occupying the target channel, then notify the first device of the time period by using the control message, and indicate the communication mode to be used by the first device. Then the first device determines the time for sending the data frame to the AP device in the time period, and sends the data frame to the AP device by using the communication mode indicated by the AP device. Therefore, it is ensured that the AP device implements full-duplex data transmission, and further, the transmission delay can be shortened.

The following describes a Wi-Fi communication method in this application with reference to an example.

For example, FIG. 5 shows a Wi-Fi communications system 20. In this embodiment, the Wi-Fi communications system 20 includes an ONT device 21, a first AP device 22, a second AP device 23, and a station device 24. Both the first AP device 22 and the second AP device 23 are, for example, routers, and the station device 24 is, for example, a mobile phone. Correspondingly, the first AP device 22 may also be described as a router 22, the second AP device 23 may also be described as a router 23, and the station device 24 may also be described as a mobile phone 24. The mobile phone 24 accesses, by using the router 22 and the router 23, a Wi-Fi network provided by the ONT device 21.

The ONT device 21 is configured to convert an optical signal into an Ethernet signal.

The router 22 and the router 23 are configured to expand coverage of network signals provided by the ONT device 21, and provide a wireless access point for network access for the mobile phone 24. The router 22 and the router 23 are further configured to forward data between the ONT device 21 and the mobile phone 24.

It may be understood that the Wi-Fi communications system 20 shown in FIG. 5 is merely an example for description, and does not constitute a limitation on the Wi-Fi communications system 20. In other embodiments, the Wi-Fi communications system 20 may further include more or fewer devices, or the like.

With reference to the Wi-Fi communications system 20, the following separately describes the technical solutions of this application by using two implementation scenarios.

FIG. 6A is a schematic diagram of an execution time sequence of a Wi-Fi communication method 200. The Wi-Fi communication method 200 (hereinafter referred to as the method 200) is described by using signaling interaction between the router 22 and the router 23 as an example. The router 22 is connected to the router 23 by using a target channel. In this embodiment, the router 22 uses a full-duplex communication mode to communicate with the router 23. The router 23 supports the full-duplex communication mode. The method 200 includes the following steps.

Step S201: The router 22 senses whether the target channel is idle.

In this embodiment, an implementation of the target channel may be any one of FIG. 4A to FIG. 4C.

It should be noted that, when the implementation of the target channel is FIG. 4B and FIG. 4C, the target channel is not only applicable to the embodiment shown in FIG. 6A, but also applicable to another embodiment.

Step S202: If the target channel is idle, the router 22 sends an RTS message 1 to the router 23 by using the target channel.

The RTS message 1 includes a time period in which the router 22 occupies the target channel. For example, the time period is from a time T1 to a time T1+100 microseconds (µs), where T1 is a time at which the router 22 sends the RTS message 1. The RTS message 1 further includes information for indicating the router 23 to use the full-duplex communication mode for data transmission with the router 22.

For other fields included in the RTS message 1, refer to the embodiment corresponding to FIG. 3A. Details are not described herein.

Step S203: The router 23 determines, based on the time period, a time Tm for sending a data frame (frame) 1, and sends a CTS message 1 to the router 22 by using the target channel.

The router 23 can learn, based on the time period, a time of arrival of an ACK frame 2, where the time of arrival of the ACK frame 2 is, for example, a time T1+100 µs. Further, the router 23 subtracts transmission duration of the ACK frame 2 and an IFS from the time of arrival of the ACK frame 2, to obtain a time of arrival of a frame 2, where the time of arrival of the frame 2 is, for example, a time T1+75 µs. The router 23 already knows a data volume of the frame 1. The router 23 may negotiate a transmission rate of the frame 1 with the router 2. After determining the transmission rate, the router 23 determines transmission duration of the frame 1 based on the data volume and the transmission rate of the frame 1. Then the router 23 subtracts the transmission duration from the time T1+75 µs, to obtain the time Tm for sending the frame 1.

In this embodiment, a time at which the router 23 receives the RTS message 1 is, for example, a time T2. Then the router 23 may wait for an IFS and send the CTS message 1 to the router 22.

An occupation time period indicated in the CTS message 1 is from the time T2 to the time T1+100 µs. For other fields in the CTS message 1, refer to the embodiment corresponding to FIG. 3A. Details are not described herein.

After receiving the CTS message 1, the router 22 waits for an IFS. Then the router 22 may send the frame 2 to the router 23 by using the target channel.

It can be learned that, based on operation processes of the router 22 and the router 23, after receiving the RTS message 1, the router 23 should wait for transmission duration of the CTS message 1 and twice the IFS (that is, 32 µs) starting from the time T2. Then, in some embodiments, the clock on the router 23 may have reached the time Tm. In other embodiments, the router 23 may need to continue to wait for specific duration before reaching the time Tm. In actual implementation, the router 23 may determine the waiting duration based on the data volume of the frame 1. Details are not described herein.

Step S204: The router 23 sends the frame 1 to the router 22 at the time Tm by using the target channel; and the router 22 sends the frame 2 to the router 23 at the time Tm by using the target channel.

Step S205: After receiving the frame 2, the router 23 waits for an IFS; and after receiving the frame 1, the router 22 waits for an IFS.

Step S206: The router 23 sends the ACK frame 2 to the router 22 at the time Tn by using the target channel; and the router 22 sends the ACK frame 1 to the router 23 at the time Tn by using the target channel.

The ACK frame 1 is an ACK frame for the frame 1. The ACK frame 2 is an ACK frame for the frame 2.

In addition, for an embodiment of transmission of each data frame and the ACK frame on the target channel in the method 200, refer to related descriptions in FIG. 4A, FIG. 4B-1, and FIG. 4C. Details are not described herein.

FIG. 6B is a schematic diagram of an execution time sequence of a Wi-Fi communication method 300. The Wi-Fi communication method 300 (hereinafter referred to as the method 300) is described by using signaling interaction between the router 22 and the router 23 and the ONT device 21 as an example. The router 22 is connected to the router 23 and the ONT device 21 by using a target channel. In this embodiment, the router 22 uses a full-duplex communication mode to communicate with the router 23 and the ONT device 21. Both the router 23 and the ONT device 21 use a half-duplex communication mode to communicate with the router 22. The method 300 includes the following steps.

Step S301: The router 22 senses whether the target channel is idle.

In this embodiment, an implementation of the target channel is shown in FIG. 4B or FIG. 4C.

Step S302: If the target channel is idle, the router 22 sends an RTS message 2 to the router 23 by using the target channel.

In this embodiment, the router 22 receives a data frame from the router 23. Based on this, the router 22 requires the router 23 to determine a time for sending the data frame, to implement full-duplex communication.

The RTS message 2 includes a time period in which the router 22 occupies the target channel, and information for indicating the router 23 to use the half-duplex communication mode for data transmission with the router 22. The time period in which the router 22 occupies the target channel may be described in the method 200, and details are not described herein.

For other fields included in the RTS message 2, refer to the embodiment corresponding to FIG. 3A. Details are not described herein.

Step S303: The router 23 determines, based on the time period, a time Tm for sending a frame 1, and sends a CTS message 2 to the router 22 by using the target channel.

In this embodiment, after receiving the CTS message 2, the router 22 waits for an IFS. Then the router 22 may send a frame 2 to the ONT device 21 by using the target channel.

The CTS message 2 and the process of determining the time Tm in this embodiment may be described in the method 200, and details are not described herein.

Step S304: The router 23 sends the frame 1 to the router 22 at the time Tm by using the target channel; and the router 22 sends the frame 2 to the ONT device 21 at the time Tm by using the target channel.

Step S305: After receiving the frame 1, the router 22 waits for an IFS; and after receiving the frame 2, the ONT device 21 waits for an IFS.

Step S306: The router 22 sends an ACK frame 1 to the router 23 by using the target channel; and the ONT device 21 sends an ACK frame 2 to the router 22 by using the target channel.

For an embodiment of transmission of each data frame and the ACK frame on the target channel in the method 300, refer to related descriptions in FIG. 4B-2, and FIG. 4C. Details are not described herein.

In the embodiments shown in FIG. 6A and FIG. 6B, the control message is implemented as an RTS message. An example in which a control message is implemented as a data frame packet header is used hereinafter to describe the technical solution of this application.

FIG. 6C is a schematic diagram of an execution time sequence of a Wi-Fi communication method 400. The Wi-Fi communication method 400 (hereinafter referred to as the method 400) is described by using signaling interaction between the router 22 and the router 23 as an example. In FIG. 6C, the router 22 is connected to the router 23 by using a target channel. The router 22 uses a full-duplex communication mode to communicate with the router 23. The router 23 supports the full-duplex communication mode. The method 400 includes the following steps.

Step S401: The router 22 senses whether the target channel is idle.

Step S402: If the target channel is idle, the router 22 sends packet header data of a frame 2 to the router 23 by using the target channel.

The packet header data includes a time period in which the router 22 occupies the target channel, and information for indicating the router 23 to use a half-duplex communication mode for data transmission with the router 22. The time period in which the router 22 occupies the target channel may be described in the method 200 and the method 300, and details are not described herein.

It should be noted that, in other embodiments, the packet header data may include only the time period in which the router 22 occupies the target channel. After determining that the target channel is idle, the router 22 may further send another communication message to the router 23, where the another communication message includes information for indicating the router 23 to use the half-duplex communication mode for data transmission with the router 22.

Step S403: The router 23 determines, based on the time period, a time Tm for sending a frame 1 and a data volume of the frame 1.

In this embodiment, the data volume of the frame 1 is not determined. After receiving the packet header data of the frame 2, the router 23 can determine a time of arrival of remaining data of the frame 2 and a data volume of the remaining data of the frame 2. For a determining manner, refer to related descriptions in the method 200, and details are not described herein. Then the router 23 may negotiate a transmission rate of the frame 1 with the router 2. Further, the router 23 may determine the data volume of the frame 1 based on the transmission rate and the data volume of the remaining data of the frame 2. Then the router 23 determines, based on the data volume and a transmission rate of the frame 1, transmission duration of the frame 1 and the time Tm for sending the frame 1. In this embodiment, the transmission duration of the frame 1 is, for example, T0.

In this embodiment, the router 22 has sent the frame 2. Therefore, the router 23 does not need to ensure that data frames are sent simultaneously with the router 22, and the router 23 may only ensure that the frame 1 and the frame 2 reach the corresponding receiving devices simultaneously. After sending the packet header data of the frame 2, the router 22 may wait for an IFS. Then the router 22 sends the remaining data of the frame 2 to the router 23 by using the target channel.

Step S404: The router 23 sends the frame 1 to the router 22 at the time Tm by using the target channel.

Step S405: After receiving the frame 1 at a time Tm+T0, the router 22 waits for an IFS; and after receiving the remaining data of the frame 2 at the time Tm+T0, the router 23 waits for an IFS.

Step S406: The router 22 sends an ACK frame 1 to the router 23 by using the target channel; and the router 23 sends an ACK frame 2 to the router 22 by using the target channel.

It may be understood that FIG. 6C is merely an example for description. In a scenario in which the router 22 uses the full-duplex communication mode, and the router 23 uses the half-duplex communication mode, the method 400 shown in FIG. 6C is also applicable. Details are not described herein.

It may be understood that the methods shown in FIG. 6A to FIG. 6C are merely examples for description, and do not constitute any limitation on the Wi-Fi communication method in this application. In other embodiments, the AP device may be another wireless access point device, and the station device may alternatively be another user equipment. In addition, in the method 300, the router 22 and the router 23 may send data frames at different times.

In summary, the AP device in embodiments of this application uses the full-duplex communication mode. After determining that the target channel is idle, the AP device may determine the time period for occupying the target channel, then notify the first device of the time period by using the control message, and indicate the communication mode to be used by the first device. Then the first device determines the time for sending the data frame to the AP device in the time period, and sends the data frame to the AP device by using the communication mode indicated by the AP device. Therefore, it is ensured that the AP device implements full-duplex data transmission, and further, the transmission delay can be shortened.

The solutions of the Wi-Fi communication methods provided in this application are described separately from perspectives of hardware structures, software architectures, and actions performed by software and hardware of the AP device and the first device in the foregoing embodiments. A person skilled in the art should be easily aware that processing steps described with reference to embodiments disclosed in this specification can be implemented by hardware or a combination of hardware and computer software in this specification. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

For example, the AP device may implement a corresponding function by using a software module. As shown in FIG. 7A, the AP device 70 may include a sensing unit 701, a sending unit 702, and a receiving unit 703. The AP device 70 may be configured to perform the operations of the AP device in FIG. 2 and the operations of the router 22 in FIG. 6A to FIG. 6C.

For example, the sensing unit 701 is configured to sense whether a target channel is idle. The sending unit 702 may be configured to: if the target channel is idle, send a first control message to a first device by using the target channel, where the first control message includes information indicating that the AP device uses a full-duplex mode for data frame transmission and a time period in which the AP device occupies the target channel, and the time period is used by the first device to determine a time for sending a data frame by using the target channel. The receiving unit 703 may be configured to receive a first data frame from the first device after the time in the time period by using the target channel.

It can be learned that, in the implementation of this application, the AP device can control the first device to send a data frame to the AP device by using the target channel, thereby implementing full-duplex data frame transmission and further shortening a transmission delay.

Optionally, the sending unit 702 is further configured to send a first ACK frame to the first device by using the target channel, where the first ACK frame is an ACK frame for the first data frame.

Optionally, in some embodiments, the first control message further includes information for indicating the first device to use the full-duplex mode for data frame transmission with the AP device. In this embodiment, the sending unit 702 is further configured to send a second data frame to the first device in the time period by using the target channel. The receiving unit 703 is further configured to receive a second ACK frame in the time period by using the target channel, where the second ACK frame is an ACK frame for the second data frame.

Optionally, the receiving unit 703 is further configured to receive the first data frame and the second ACK frame by using a first group of resource units. The sending unit 702 is further configured to send the first ACK frame and the second data frame by using a second group of resource units, where the first group of resource units and the second group of resource units form the target channel.

Optionally, if the target channel is idle, the sending unit 702 is further configured to send a second control message to the first device by using the target channel, where the second control message includes the information indicating that the AP device uses the full-duplex mode for data frame transmission, the time period, and information for indicating the first device to use a half-duplex mode for data frame transmission with the AP device.

Optionally, the receiving unit 703 is further configured to receive the first data frame by using a first group of resource units. The sending unit 702 is further configured to send a first ACK frame by using the first group of resource units, where the first group of resource units occupies a part of a bandwidth of the target channel.

Optionally, the AP device 70 further includes a noise reduction unit. The noise reduction unit may be configured to perform noise reduction on echo noise corresponding to the second data frame, so that a signal-to-noise ratio of the first data frame meets a receiving condition.

It should be understood that division of the foregoing units is merely logical function division. During actual implementation, all or some of the units may be integrated into one physical entity, or may be physically separated. In this embodiment of this application, the sensing unit 701 and the noise reduction unit may be implemented by a processor, and the sending unit 702 and the receiving unit 703 may be implemented by a transceiver. As shown in FIG. 7B, the AP device 71 may include a processor 711, a transceiver 712, and a memory 713. The memory 713 may be configured to store a program/code preinstalled when the AP device 71 is delivered from a factory, or may store code for execution by the processor 711, or the like.

It should be understood that the AP device 71 in this embodiment of this application may correspond to the AP device in FIG. 2 and the router 22 in FIG. 6A to FIG. 6C. The transceiver 712 is configured to perform various data receiving and sending operations performed by the AP device in FIG. 2, and data receiving and sending operations performed by the router 22 in FIG. 6A to FIG. 6C. The processor 711 is configured to perform other processing than data receiving and sending operations performed by the AP device in FIG. 2, and other processing than data receiving and sending operations performed by the router 22 in FIG. 6A to FIG. 6C. Details are not described herein again.

For specific content, refer to FIG. 2 and descriptions of related parts in FIG. 6A to FIG. 6C. Details are not described herein again.

For example, the first device may implement a corresponding function by using a software module. As shown in FIG. 8A, an electronic device 80 may include a receiving unit 801, a determining unit 802, and a sending unit 803. The electronic device 80 may be configured to perform the operations of the first device in FIG. 2 and the operations of the router 23 in FIG. 6A to FIG. 6C.

For example, the receiving unit 801 may be configured to receive a first control message from an AP device by using a target channel, where the first control message includes information indicating that the AP device uses a full-duplex mode for data frame transmission and a time period in which the AP device occupies the target channel. The determining unit 802 is configured to determine, based on the time period, a time for sending a first data frame, where the sending time is in the time period. The sending unit 803 is configured to send the first data frame to the AP device at the sending time by using the target channel.

It can be learned that, in the implementation of this application, the first device can determine, in response to the indication of the control message, a time for sending a data frame to the AP device in the time period in which the AP device occupies the target channel, so that the AP device can implement full-duplex data frame transmission, and further, a transmission delay can be shortened.

Optionally, the receiving unit 801 is further configured to receive a first acknowledgement ACK frame from the AP device in the time period by using the target channel, where the first ACK frame is an ACK frame for the first data frame.

Optionally, the first control message further includes information for indicating the first device to use the full-duplex mode for data frame transmission with the AP device. In this embodiment, the receiving unit 801 is further configured to receive a second data frame from the AP device in the time period by using the target channel. The sending unit 803 is further configured to send a second ACK frame to the AP device in the time period by using the target channel, where the second ACK frame is an ACK frame for the second data frame.

Optionally, the sending unit 803 is further configured to send the first data frame and the second ACK frame by using a first group of resource units. The receiving unit 801 is further configured to receive the second data frame and the first ACK frame by using a second group of resource units, where the first group of resource units and the second group of resource units form the target channel.

Optionally, the receiving unit 801 is further configured to receive a second control message from the AP device by using the target channel, where the second control message includes the information indicating that the AP device uses the full-duplex mode for data frame transmission, the time period, and information for indicating the first device to use a half-duplex mode for data frame transmission with the AP device.

Optionally, the sending unit 803 is further configured to send the first data frame by using a first group of resource units. The receiving unit 801 is further configured to receive the first ACK frame by using a first group of resource units, where the first group of resource units occupies a part of a bandwidth of the target channel.

Optionally, the determining unit 802 is further configured to: determine, by the first device, based on the time period, a time at which the AP device completes sending of the data frame; determine a transmission rate of the first data frame on the target channel; determine transmission duration of the first data frame on the target channel based on the transmission rate and a data volume of the first data frame; and obtain the sending time by subtracting the transmission duration from the time at which the AP device completes sending of the data frame.

Optionally, the electronic device 80 may further include a reading unit and a transmission unit. The reading unit may be configured to read transmission mode information from the first control message or a second control message, where the transmission mode information indicates information about use of the target channel by at least one of the AP device and the first device. The transmission unit may be configured to transmit a data frame by using the target channel based on the transmission mode information.

It should be understood that division of the foregoing modules is merely logical function division. During actual implementation, all or some of the modules may be integrated into one physical entity, or may be physically separated. In this embodiment of this application, the determining unit 802, the noise reduction unit, and the transmission unit may be implemented by a processor, and the receiving unit 801 and the sending unit 803 may be implemented by a transceiver. As shown in FIG. 8B, the electronic device 81 may include a processor 811, a transceiver 812, and a memory 813. The memory 813 may be configured to store a program/code preinstalled when the electronic device 81 is delivered from a factory, or may store code for execution by the processor 811, or the like.

It should be understood that the electronic device 81 in this embodiment of this application may correspond to the first device in FIG. 2 and the router 23 in FIG. 6A to FIG. 6C. The transceiver 712 is configured to perform various data receiving and sending operations performed by the first device in FIG. 2, and data receiving and sending operations performed by the router 23 in FIG. 6A to FIG. 6C. The processor 711 is configured to perform other processing than data receiving and sending operations performed by the first device in FIG. 2, and other processing than data receiving and sending operations performed by the router 23 in FIG. 6A to FIG. 6C. Details are not described herein again.

For specific content, refer to FIG. 2 and descriptions of related parts in FIG. 6A to FIG. 6C. Details are not described herein again.

An embodiment of this application provides a Wi-Fi communications system. The Wi-Fi communications system includes an AP device and an electronic device. The AP device may be the AP device provided in the embodiment corresponding to FIG. 7A or FIG. 7B, and the electronic device may be the electronic device provided in the embodiment corresponding to FIG. 8A or FIG. 8B. The Wi-Fi communications system is configured to perform any method in the embodiments corresponding to FIG. 2 and FIG. 6A to FIG. 6C.

During specific implementation, corresponding to the AP device and the electronic device, an embodiment of this application further separately provides a computer storage medium. The computer storage medium disposed in any device may store a program. When the program is executed, some or all of the steps in the embodiments including the Wi-Fi communication methods provided in FIG. 2 and FIG. 6A to FIG. 6C may be performed. The storage medium in any device may be a magnetic disk, an optical disc, a read-only memory (read-only memory, ROM), a random access memory (random access memory, RAM), or the like.

The transceiver in this application may be a wired transceiver, a wireless transceiver, or a combination thereof. The wired transceiver may be, for example, an Ethernet interface. The Ethernet interface may be an optical interface, an electrical interface, or a combination thereof. The wireless transceiver may be, for example, a wireless local area network transceiver, a cellular network transceiver, or a combination thereof. The processor may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof. The memory may include a volatile memory (volatile memory), for example, a random access memory (random access memory, RAM); the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or the memory may further include a combination of the foregoing types of memories.

A bus interface may be further included in FIG. 7B and FIG. 8B. The bus interface may include any quantity of interconnected buses and bridges, and specifically links various circuits of one or more processors represented by a processor and memories represented by a memory. The bus interface may further link together various other circuits such as a peripheral device, a voltage regulator, and a power management circuit. This is well known in the art, and therefore is not further described in this specification. The bus interface provides an interface. The transceiver provides a unit configured to communicate with various other devices on a transmission medium. The processor is responsible for managing a bus architecture and normal processing. The memory may store a packet used when the processor is performing an operation.

A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

The various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an EPROM, an EEPROM, a register, a hard disk, a removable magnetic disk, a CD-ROM, or a storage medium of any other form in the art. For example, the storage medium may connect to a processor, so that the processor can read information from the storage medium and write information into the storage medium. Optionally, the storage medium may alternatively be integrated into the processor. The processor and the storage medium may be disposed in the ASIC, and the ASIC may be disposed in the device. Optionally, the processor and the storage medium may alternatively be disposed in different components in the device.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or packet center to another website, computer, server, or packet center in a wired (for example, a coaxial cable, an optical fiber, or a digital subscriber line (DSL)) or wireless (for example, infrared, radio, or microwave) manner. The computer-readable storage medium may be any usable medium accessible by a computer, or a packet storage device, such as a server or a packet center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

All parts in this specification are described in a progressive manner. For same or similar parts in embodiments, refer to these embodiments. Each embodiment focuses on a difference from other embodiments. Especially, apparatus and system embodiments are basically similar to a method embodiment, and therefore are described briefly; for related parts, refer to partial descriptions in the method embodiment.

Although some preferred embodiments of this application have been described, persons skilled in the art can make changes and modifications to these embodiments once they learn the basic inventive concept. Therefore, the appended claims are intended to be construed as to cover the preferred embodiments and all changes and modifications falling within the scope of this application.

It is clear that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A wireless Wi-Fi communication method, wherein the method comprises:
sensing, by an access point AP device, whether a target channel is idle;
if the target channel is idle, sending, by the AP device, a first control message to a first device by using the target channel, wherein the first control message comprises information indicating that the AP device uses a full-duplex mode for data frame transmission and a time period in which the AP device occupies the target channel, and the time period is used by the first device to determine a time for sending a data frame by using the target channel; and
receiving, by the AP device, a first data frame from the first device after the time in the time period by using the target channel.

2. The method according to claim 1, wherein after the receiving, by the AP device, a first data frame from the first device in the time period by using the target channel, the method further comprises:
sending, by the AP device, a first acknowledgement ACK frame to the first device by using the target channel, wherein the first ACK frame is an ACK frame for the first data frame.

3. The method according to claim 1 or 2, wherein the first control message further comprises information for indicating the first device to use the full-duplex mode for data frame transmission with the AP device, and after the sending, by the AP device, a first control message to a first device by using the target channel, the method further comprises:
sending, by the AP device, a second data frame to the first device in the time period by using the target channel; and
receiving, by the AP device, a second ACK frame in the time period by using the target channel, wherein the second ACK frame is an ACK frame for the second data frame.

4. The method according to claim 3, wherein
the AP device receives the first data frame and the second ACK frame by using a first group of resource units; and
the AP device sends the first ACK frame and the second data frame by using a second group of resource units, wherein the first group of resource units and the second group of resource units form the target channel.

5. The method according to claim 1 or 2, wherein the method further comprises:
if the target channel is idle, sending, by the AP device, a second control message to the first device by using the target channel, wherein the second control message comprises the information indicating that the AP device uses the full-duplex mode for data frame transmission, the time period, and information for indicating the first device to use a half-duplex mode for data frame transmission with the AP device.

6. The method according to claim 4, wherein
the AP device receives the first data frame and sends the first ACK frame by using a first group of resource units, wherein the first group of resource units occupies a part of a bandwidth of the target channel.

7. The method according to any one of claims 1 to 5, wherein
the first control message and the second control message further comprise transmission mode information, and the transmission mode information indicates information about use of the target channel by at least one of the AP device and the first device.

8. The method according to claim 3 or 4, wherein after the sending, by the AP device, a second data frame to the first device in the time period by using the target channel, the method further comprises:
performing, by the AP device, noise reduction on echo noise corresponding to the second data frame, so that a signal-to-noise ratio of the first data frame meets a receiving condition.

9. A wireless Wi-Fi communication method, wherein the method comprises:
receiving, by a first device, a first control message from an access point AP device by using a target channel, wherein the first control message comprises information indicating that the AP device uses a full-duplex mode for data frame transmission and a time period in which the AP device occupies the target channel;
determining, by the first device based on the time period, a time for sending a first data frame, wherein the sending time is in the time period; and
sending, by the first device, the first data frame to the AP device at the sending time by using the target channel.

10. The method according to claim 9, wherein after the sending, by the first device, the first data frame to the AP device at the sending time by using the target channel, the method further comprises:
receiving, by the first device, a first acknowledgement ACK frame from the AP device in the time period by using the target channel, wherein the first ACK frame is an ACK frame for the first data frame.

11. The method according to claim 9 or 10, wherein the first control message further comprises information for indicating the first device to use the full-duplex mode for data frame transmission with the AP device, and the method further comprises:
receiving, by the first device, a second data frame from the AP device in the time period by using the target channel; and
sending, by the first device, a second ACK frame to the AP device in the time period by using the target channel, wherein the second ACK frame is an ACK frame for the second data frame.

12. The method according to claim 11, wherein
the first device sends the first data frame and the second ACK frame by using a first group of resource units; and
the first device receives the second data frame and the first ACK frame by using a second group of resource units, wherein the first group of resource units and the second group of resource units form the target channel.

13. The method according to claim 9 or 10, wherein the method further comprises:
receiving, by the first device, a second control message from the AP device by using the target channel, wherein the second control message comprises the information indicating that the AP device uses the full-duplex mode for data frame transmission, the time period, and information for indicating the first device to use a half-duplex mode for data frame transmission with the AP device.

14. The method according to claim 13, wherein
the first device sends the first data frame and receives the first ACK frame by using a first group of resource units, wherein the first group of resource units occupies a part of a bandwidth of the target channel.

15. The method according to claim 9, wherein the determining, by the first device based on the time period, a time for sending a first data frame comprises:
determining, by the first device based on the time period, a time at which the AP device completes sending of the data frame;
determining, by the first device, a transmission rate of the first data frame on the target channel;
determining, by the first device, transmission duration of the first data frame on the target channel based on the transmission rate and a data volume of the first data frame; and
obtaining, by the first device, the sending time by subtracting the transmission duration from the time at which the AP device completes sending of the data frame.

16. The method according to any one of claims 9 to 14, wherein the method further comprises:
reading, by the first device, transmission mode information from the first control message or the second control message, wherein the transmission mode information indicates information about use of the target channel by at least one of the AP device and the first device; and
transmitting, by the first device, a data frame based on the transmission mode information by using the target channel.

17. An access point AP device, wherein the device comprises a sensing unit, a sending unit, and a receiving unit, wherein
the sensing unit is configured to sense whether a target channel is idle;
the sending unit is configured to: if the target channel is idle, send a first control message to a first device by using the target channel, wherein the first control message comprises information indicating that the AP device uses a full-duplex mode for data frame transmission and a time period in which the AP device occupies the target channel, and the time period is used by the first device to determine a time for sending a data frame by using the target channel; and
the receiving unit is configured to receive a first data frame from the first device after the time in the time period by using the target channel.

18. The device according to claim 17, wherein the first control message further comprises information for indicating the first device to use the full-duplex mode for data frame transmission with the AP device;
the sending unit is further configured to send a second data frame to the first device in the time period by using the target channel; and
the receiving unit is further configured to receive a second acknowledgement ACK frame in the time period by using the target channel, wherein the second ACK frame is an ACK frame for the second data frame.

19. The device according to claim 18, wherein
the receiving unit is further configured to receive the first data frame and the second ACK frame by using a first group of resource units; and
the sending unit is further configured to send a first ACK frame and the second data frame by using a second group of resource units, wherein the first ACK frame is an ACK frame for the first data frame, and the first group of resource units and the second group of resource units form the target channel.

20. The device according to claim 17, wherein
the sending unit is further configured to: if the target channel is idle, send a second control message to the first device by using the target channel, wherein the second control message comprises the information indicating that the AP device uses the full-duplex mode for data frame transmission, the time period, and information for indicating the first device to use a half-duplex mode for data frame transmission with the AP device.

21. The device according to claim 20, wherein
the receiving unit is further configured to receive the first data frame by using a first group of resource units; and
the sending unit is further configured to send a first ACK frame by using the first group of resource units, wherein the first group of resource units occupies a part of a bandwidth of the target channel.

22. An electronic device, used as a first device, wherein the device comprises a receiving unit, a determining unit, and a sending unit, wherein
the receiving unit is configured to receive a first control message from an access point AP device by using a target channel, wherein the first control message comprises information indicating that the AP device uses a full-duplex mode for data frame transmission and a time period in which the AP device occupies the target channel;
the determining unit is configured to determine, based on the time period, a time for sending a first data frame, wherein the sending time is in the time period; and
the sending unit is configured to send the first data frame to the AP device at the sending time by using the target channel.

23. The device according to claim 22, wherein the first control message further comprises information for indicating the first device to use the full-duplex mode for data frame transmission with the AP device;
the receiving unit is further configured to receive a second data frame from the AP device in the time period by using the target channel; and
the sending unit is further configured to send a second acknowledgement ACK frame to the AP device in the time period by using the target channel, wherein the second ACK frame is an ACK frame for the second data frame.

24. The device according to claim 22, wherein
the receiving unit is further configured to receive a second control message from the AP device by using the target channel, wherein the second control message comprises the information indicating that the AP device uses the full-duplex mode for data frame transmission, the time period, and information for indicating the first device to use a half-duplex mode for data frame transmission with the AP device.

25. The device according to claim 22, wherein
the determining unit is further configured to: determine, by the first device, based on the time period, a time at which the AP device completes sending of the data frame; determine a transmission rate of the first data frame on the target channel; determine transmission duration of the first data frame on the target channel based on the transmission rate and a data volume of the first data frame; and obtain the sending time by subtracting the transmission duration from the time at which the AP device completes sending of the data frame.

26. A Wi-Fi communications system, wherein the Wi-Fi communications system comprises an access point AP device and an electronic device that are connected to each other, the AP device is the AP device according to any one of claims 17 to 21, and the electronic device is the electronic device according to any one of claims 22 to 25.

27. An AP device, comprising a transceiver, a processor, and a memory, wherein
the transceiver is configured to transmit or receive data;
the memory is configured to store a program, instructions, or code; and
the processor is configured to execute the program, the instructions, or the code in the memory to implement the method according to any one of claims 1 to 8.
